# EUROPEAN PATENT SPECIFICATION

(11) **EP 1 748 241 B1**
(45) Date of publication and mention of the grant of the patent: **20.11.2013**
(21) Application number: 05106841.9
(22) Date of filing: 26.07.2005
(51) Int. Cl.: F16L 9/133, B32B 1/08, B32B 27/30

(54) **PVC tube provided with a friction-reducing layer, method for the production thereof and use**
PVC-Schlauch mit einer reibungsverminderden Schicht, Verfahren zu dessen Herstellung und Verwendung
Produit tubulaire en PVC comprenant une couche réductrice de friction, méthode de fabrication et utilisation

(43) Date of publication of application: 31.01.2007
(73) Proprietor: Pipelife Nederland B.V., 1601 MA Enkhuizen (NL)
(72) Inventor: De Boer, Jan, 1601 LJ, Enkhuizen (NL); Harms, Hans-Jürgen, D-06366, Köthen (DE)
(74) Representative: Nederlandsch Octrooibureau

(56) References cited:
- WO-A-93/14546
- US-A- 4 892 442
- US-A1- 2003 102 043

## Description

The present invention relates to a PVC tube having a friction-reducing layer applied to the inside.

Such a PVC tube is generally known in the state of the art. This can be, for example, an electrical conduit, where the inside of the tube has been provided with a layer of friction-reducing material to facilitate subsequent pulling through of electrical wiring.

Such a tube consists of an outer jacket of hard PVC material, a bonding layer applied inside this and a friction-reducing layer applied to the bonding layer. One example of such a PVC tube is found in DE 20320502-U1. In this publication it is indicated that, in contrast to polyethene tubes, it is necessary to apply an additional bonding layer because the friction-reducing layer and the PVC material cannot be bonded directly to one another, as a consequence of the lack of chemical compatibility. In the case of polyethene tubes such bonding is possible and in this case a polyethene material is also used for the friction-reducing layer.

US-A-2003/102043 discloses an inner duct, which comprises a duct tube having an inner surface and an outer surface, and at least one passageway. The duct tube is manufactured from polymeric materials as known to one of ordinary skill in the art such as a polyvinyl chloride (PVC) or a high-density polyethylene (HDPE). The duct tube may be formed by co-extruding two or more materials to form a multilayered monolithic duct tube. For example, the duct tube may include a first layer, which may include a material impregnated with a lubricating agent. According to paragraph 38, suitable materials for the first layer are, for example, Teflori®, silicone impregnated polyethylene, graphite impregnated polyethylene, or other suitable polymeric materials having lubricating agents therein.

US-A-4 892 442 relates to a prelubricated innerduct having a coextruded inner core of a material impregnated with a lubricous agent to lower its coefficient of friction to other objects. The inner duct is produced by coextrusion methods so as to form an outer jacket of a high tensile strength polymer such as high molecular weight, high density polyethylene and an inner layer of a high molecular weight lubricous compound, such as Teflon®, silicone impregnated polyethylene, graphite impregnated polyethylene, and the like.

WO-A-93/14546 is directed towards the formulation of a lubricative coating on the interior surface of an extruded plastic pipe or duct. The lubricating coating is applied in a powder or a liquid form. If a powder is applied; the temperature of the duct immediately following extrusion melts the solid and, when cooled, the solid fuses with the duct.

The powder comprises lubricating materials such as: silicones, fluoropolymers, graphite, ultra high molecular weight polyethylene, fatty acids and fatty acid derivatives, etc. which are compounded with at least one additive resin chosen from the group comprising polyolefins, polyolefin waxes, polyamides, acrylics, polyesters, thermoplastic polyurethanes, poly(vinyl chloride), acrylonitrile-butadiene-styrene, silicon copolymers, fluoropolymers and other organic high molecular weight capable of being thermally melt processed, and optionally further additives which may be thermally melted and cross-linked. The duct can be made of any conventional material, such as ABS, polyolefin, PVR, or nylon; however, the Examples relate to HDPE ducts only.

The aim of the present invention is to avoid the complex and expensive structure that is proposed in DE 20320502-U1 on the one hand but, on the other hand, to maintain the use of PVC tubes, in particular in the field of electrical engineering.

This aim is realised with a PVC tube as described above in that said layer of friction-reducing material comprises a plastic that can be extruded with the PVC material of said PVC tube and bonds thereto.

Surprisingly, it has been found that in contrast to the preconceptions in the state of the art it is possible to bond a friction-reducing layer directly to the PVC material. By means of co-extrusion a PVC tube can be provided which has a friction-reducing layer applied to the inside thereof. A two-layer tube is easier to produce; extrusion problems that arise as a result of the use of a thin intermediate bonding layer are avoided.

Such a friction-reducing layer can be a layer based on ethylene acrylate copolymers. Examples of these are ethylene methyl acrylate and ethylene butyl acrylate. Ethylene methyl acrylate is mentioned in particular. Other bonding layers are ethylene vinyl acetate copolymers (EVA), ethylene acrylic acid copolymers (EAA), ethylene acrylic ester terpolymers, ethylene vinyl acetate terpolymers and anhydride-grafted polyolefins. It is assumed that the characterising functional groups make chemical combination of the copolymer with PVC possible, as a result of which bonding is promoted. Other types of functional groups can also contribute to an increased affinity for PVC. The various aspects can, for example, be determined on the basis of solubility parameter for the particular plastic that is applied directly to the PVC material as friction-reducing layer.

Other examples are plastics which under normal conditions do not bond to PVC material, such as polyethylene to which bonding agents have been added. These bonding agents are added before the co-extrusion, so that after co-extrusion, as described above, a two-layer tube is obtained with a PVC outer jacket and a friction-reducing layer applied directly thereto, that is to say without intermediate bonding layer. Such friction-reducing plastics can, for example, be mixed with the abovementioned substances that bond to PVC, for example ethylene vinyl acetate, but also anhydride-grafted copolymers, such as maleic anhydride, modified polyolefins, such as polyethylene modified with maleic anhydride or polypropylene modified with maleic anhydride.

In all cases lubricants can be added to the plastics in order to improve the friction-reducing properties. These lubricants are added before co-extrusion to the particular plastic that is going to form the friction-reducing layer. Examples thereof are silicones. However, it is possible to use other types of oil. The amount of lubricant, such as silicone oil, used is between 1 and 10 % (m/m).

The invention also relates to a method for the production of a PVC tube, wherein with co-extrusion an outer layer consisting of PVC and a friction-reducing layer applied inside this are produced simultaneously and are bonded to one another. With this method the plastics described above can be used for the friction-reducing layer.

The PVC tubes are preferably made of hard PVC material (PVC-U). Both ribbed (flexible) and rigid tubes can be coated.

The invention will be explained in more detail below with reference to an example.

A PVC tube with a friction-reducing layer was produced by co-extrusion of PVC material and ethylene methyl acrylate. This ethylene methyl acrylate was a siliconised ethylene methyl acrylate in which approximately 4 % (m/m) silicone oil had been incorporated.

In tests to determine the frictional resistance when pulling electrical cables (copper core and PVC sheath) through the PVC tube, it was found that the force required for this is comparable to the force required to pull such electrical wiring through a polythene tube, which polythene tube was provided with a friction-reducing layer based on polyethene.

Although the invention has been described above with reference to a preferred embodiment, variants that fall within the scope of the appended claims will be immediately apparent to those skilled in the art. It must also be understood that rights are claimed expressly for subject matter described in the dependent claims, both in combination with the independent claim and independently.

## Claims

1. PVC tube having a friction-reducing layer applied to the inside, wherein said layer comprises a plastic that is extruded directly onto the PVC material of said PVC tube and bonds thereto, **characterized in that** said layer comprises a polymer containing acrylic functional groups, an ethylene vinyl acetate copolymer, an ethylene vinyl acetate terpolymer, or an anhydride-grafted copolymer.

2. The PVC tube according to claim 1, wherein said layer comprises an anhydride-grafted polyolefin.

3. PVC tube according to claim 1 or claim 2, wherein the polymer containing acrylic functional groups is an ethylene acrylate copolymer, an ethylene acrylic acid copolymer, or an ethylene acrylic ester terpolymer.

4. PVC tube according to any one of claims 1 - 3, wherein said layer comprises an ethylene methyl acrylate or an ethylene butyl acrylate.

5. The PVC tube according to any one of claims 1 - 4, wherein said layer comprises polyethylene to which an ethylene acrylate copolymer, an ethylene vinyl acetate copolymer, an ethylene acrylic acid copolymer, an ethylene acrylic ester terpolymer, an ethylene vinyl acetate terpolymer, an anhydride-grafted polyolefin, an anhydridegrafted copolymer, or a polyolefin modified with maleic anhydride has been added.

6. The PVC tube according to claim 5, wherein said layer comprises polyethylene to which ethylene vinyl acetate, polyethylene modified with maleic anhydride, polypropylene modified with maleic anhydride, or an anhydride-grafted copolymer wherein the anhydride is maleic anhydride has been added.

7. PVC tube according to any one of the preceding claims, wherein said layer comprises a plastic mixed with lubricants.

8. PVC tube according to claim 7, wherein the amount of lubricant used in said layer is between 1 and 10 % (m/m).

9. PVC tube according to claim 7 or claim 8, wherein the lubricant is an oil.

10. PVC tube according to any one of claims 7 - 9, wherein the lubricant is a silicone oil.

11. PVC tube according to one of the preceding claims, embodied as an electrical conduit.

12. Method for the production of a PVC tube according to any one of claims 1 - 11, comprising the provision of a PVC tube with an internal friction-reducing layer by means of co-extrusion of PVC and a friction-reducing plastic, wherein said friction-reducing plastic is extruded directly onto the PVC, and wherein said layer comprises a polymer containing acrylic functional groups, an ethylene vinyl acetate copolymer, an ethylene vinyl acetate terpolymer, or an anhydride-grafted copolymer.

13. The method according to claim 12, wherein said layer further comprises a lubricant mixed with the plastic.

14. The method according to claim 12 or claim 13, wherein said friction-reducing plastic is obtained by mixing a plastic provided with lubricant with the polymer containing acrylic functional groups, the ethylene vinyl acetate copolymer, the ethylene vinyl acetate terpolymer, or the anhydride-grafted copolymer.

15. The method according to claim 14, wherein the plastic is polyethylene.

16. The method according to any one of claims 13 - 15, wherein the lubricant is a silicone oil.

17. The method according to any one of claims 13 - 16, wherein the amount of lubricant used in said layer is between 1 and 10 % (m/m).

18. Use of a PVC tube according to one of claims 1 - 11 to facilitate pulling through of electrical wiring or cables.

## Patentansprüche

1. PVC-Röhre mit einer auf die Innenseite aufgebrachten reibungsreduzierenden Schicht, wobei die Schicht einen Kunststoff umfasst, der direkt auf das PVC-Material der PVC-Röhre extrudiert ist und daran bindet, **dadurch gekennzeichnet, dass** die Schicht ein funktionelle Acrylgruppen enthaltendes Polymer, ein Ethylen-Vinylacetat-Copolymer, ein Ethylen-Vinylacetat-Terpolymer oder ein Anhydrid-gepfropftes Copolymer umfasst.

2. PVC-Röhre nach Anspruch 1, wobei die Schicht ein Anhydrid-gepfropftes Polyolefin umfasst.

3. PVC-Röhre nach Anspruch 1 oder 2, wobei das funktionelle Acrylgruppen enthaltende Polymer ein Ethylen-Acrylat-Copolymer, ein Ethylen-Acrylsäure-Copolymer oder ein Ethylen-Acrylester-Terpolymer ist.

4. PVC-Röhre nach einem der Ansprüche 1 - 3, wobei die Schicht ein Ethylen-Methylacrylat oder ein Ethylen-Butylacrylat umfasst.

5. PVC-Röhre nach einem der Ansprüche 1 - 4, wobei die Schicht Polyethylen umfasst, an welches ein Ethylen-Acrylat-Copolymer, ein Ethylen-Vinylacetat-Copolymer, ein Ethylen-Acrylsäure-Copolymer, ein Ethylen-Acrylester-Terpolymer, ein Ethylen-Vinylacetat-Terpolymer, ein Anhydrid-gepfropftes Polyolefin, ein Anhydrid-gepfropftes Copolymer oder ein mit Maleinsäureanhydrid modifiziertes Polyolefin hinzugefügt worden ist.

6. PVC-Röhre nach Anspruch 5, wobei die Schicht Polyethylen umfasst, an welches ein Ethylen-Vinylacetat, mit Maleinsäureanhydrid modifiziertes Polyethylen, mit Maleinsäureanhydrid modifiziertes Polypropylen oder ein Anhydrid-gepfropftes Copolymer, wobei das Anhydrid Maleinsäureanhydrid ist, hinzugefügt worden ist.

7. PVC-Röhre nach einem der vorhergehenden Ansprüche, wobei die Schicht einen mit Schmiermittel gemischten Kunststoff umfasst.

8. PVC-Röhre nach Anspruch 7, wobei der Anteil an Schmiermittel, der in der Schicht verwendet wird, zwischen 1 und 10 % (m/m) ist.

9. PVC-Röhre nach Anspruch 7 oder 8, wobei der Schmiermittel ein Öl ist.

10. PVC-Röhre nach einem der Ansprüche 7 - 9, wobei der Schmiermittel ein Silikonöl ist.

11. PVC-Röhre nach einem der vorhergehenden Ansprüche, ausgeführt als eine Kabelführung.

12. Verfahren zur Herstellung einer PVC-Röhre nach einem der Ansprüche 1 - 11, umfassend die Bereitstellung einer PVC-Röhre mit einer innen liegenden reibungsreduzierenden Schicht anhand von Co-Extrusion von PVC und einem reibungsreduzierenden Kunststoff, wobei der reibungsreduzierende Kunststoff direkt auf das PVC extrudiert wird, und wobei die Schicht ein funktionelle Acrylgruppen enthaltendes Polymer, ein Ethylen-Vinylacetat-Copolymer, ein Ethylen-Vinylacetat-Terpolymer oder ein Anhydridgepfropftes Copolymer umfasst.

13. Verfahren nach Anspruch 12, wobei die Schicht weiterhin ein mit dem Kunststoff gemischtes Schmiermittel umfasst.

14. Verfahren nach Anspruch 12 oder 13, wobei der reibungsreduzierende Kunststoff erhalten wird durch Mischen eines mit Schmiermittel bereitgestellten Kunststoffs mit dem Polymer, welches funktionelle Acrylgruppen enthält, dem Ethylen-Vinylacetat-Copolymer, dem Ethylen-Vinylacetat-Terpolymer oder dem Anhydrid-gepfropften Copolymer.

15. Verfahren nach Anspruch 14, wobei der Kunststoff Polyethylen ist.

16. Verfahren nach einem der Ansprüche 13 - 15, wobei das Schmiermittel ein Silikonöl ist.

17. Verfahren nach einem der Ansprüche 13 - 16, wobei der Anteil an Schmiermittel, der in der Schicht verwendet wird, zwischen 1 und 10 % (m/m) ist.

18. Verwendung einer PVC-Röhre nach einem der Ansprüche 1 - 11, um Durchziehen von elektrischen Leitungen oder Kabeln zu erleichtern.

## Revendications

1. Tube en PVC ayant une couche de réduction de frottement appliquée à l'intérieur, dans lequel ladite couche comprend un plastique directement extrudé sur le matériau de PVC dudit tube en PVC et est liée à celui-ci, **caractérisé en ce que** ladite couche comprend un polymère contenant des groupes fonctionnels d'acrylique, un copolymère d'acétate de vinyle d'éthylène, un terpolymère d'acétate de vinyle d'éthylène ou un copolymère greffé avec de l'anhydride.

2. Tube en PVC selon la revendication 1, dans lequel ladite couche comprend une polyoléfine greffée avec de l'anhydride.

3. Tube en PVC selon la revendication 1 ou 2, dans lequel le polymère contenant des groupes fonctionnels d'acrylique est un copolymère d'acrylate d'éthylène, un copolymère d'acide acrylique d'éthylène ou un terpolymère d'ester acrylique d'éthylène.

4. Tube en PVC selon l'une quelconque des revendications 1 à 3, dans lequel ladite couche comprend un acrylate de méthyle d'éthylène ou un acrylate de butyle d'éthylène.

5. Tube en PVC selon l'une quelconque des revendications 1 à 4, dans lequel ladite couche comprend du polyéthylène auquel a été ajouté un copolymère d'acrylate d'éthylène, un copolymère d'acétate de vinyle d'éthylène, un copolymère d'acide acrylique d'éthylène, un terpolymère d'ester acrylique d'éthylène, un terpolymère d'acétate de vinyle d'éthylène, une polyoléfine greffée avec de l'anhydride, un copolymère greffé avec de l'anhydride ou une polyoléfine modifiée avec de l'anhydride maléique.

6. Tube en PVC selon la revendication 5, dans lequel ladite couche comprend du polyéthylène auquel a été ajouté de l'acétate de vinyle d'éthylène, du polyéthylène modifié avec de l'anhydride maléique, du polypropylène modifié avec de l'anhydride maléique ou un copolymère greffé avec de l'anhydride, l'anhydride étant de l'anhydride maléique.

7. Tube en PVC selon l'une quelconque des revendications précédentes, dans lequel ladite couche comprend un plastique mélangé avec des lubrifiants.

8. Tube en PVC selon la revendication 7, dans lequel la quantité de lubrifiant utilisée dans ladite couche est entre 1 et 10 % (m/m).

9. Tube en PVC selon la revendication 7 ou 8, dans lequel le lubrifiant est une huile.

10. Tube en PVC selon l'une quelconque des revendications 7 à 9, dans lequel le lubrifiant est une huile de silicone.

11. Tube en PVC selon l'une quelconque des revendications précédentes, réalisé en tant que conduit électrique.

12. Procédé de fabrication d'un tube en PVC selon l'une quelconque des revendications 1 à 11, comprenant la fourniture d'un tube en PVC avec une couche de réduction de frottement interne au moyen d'une co-extrusion de PVC et d'un plastique de réduction de frottement, dans lequel ledit plastique de réduction de frottement est extrudé directement sur le PVC, et dans lequel ladite couche comprend un polymère contenant des groupes fonctionnels d'acrylique, un copolymère d'acétate de vinyle d'éthylène, un terpolymère d'acétate de vinyle d'éthylène ou un copolymère greffé avec de l'anhydride.

13. Procédé selon la revendication 12, dans lequel ladite couche comprend en outre un lubrifiant mélangé avec le plastique.

14. Procédé selon la revendication 12 ou 13, dans lequel ledit plastique de réduction de frottement est obtenu en mélangeant un plastique fourni avec du lubrifiant avec le polymère contenant des groupes fonctionnels d'acrylique, le copolymère d'acétate de vinyle d'éthylène, le terpolymère d'acétate de vinyle d'éthylène ou le copolymère greffé avec de l'anhydride.

15. Procédé selon la revendication 14, dans lequel le plastique est du polyéthylène.

16. Procédé selon l'une quelconque des revendications 13 à 15, dans lequel le lubrifiant est une huile de silicone.

17. Procédé selon l'une quelconque des revendications 13 à 16, dans lequel la quantité de lubrifiant utilisé dans ladite couche est entre 1 et 10 % (m/m).

18. Utilisation d'un tube en PVC selon l'une des revendications 1 à 11 pour faciliter le tirage de fils ou de câbles électriques.
